# EUROPEAN PATENT APPLICATION

(11) **EP 4 763 412 A1**
(43) Date of publication of application: **24.06.2026**
(21) Application number: 24855084.0
(22) Date of filing: 19.07.2024
(51) Int. Cl.: B23K 37/00, B23K 37/04

(54) **POSITIONING DEVICE AND BATTERY PROCESSING APPARATUS**

(30) Priority: 18.08.2023 CN 202322225509 U
(71) Applicant: Wuxi Lead Intelligent Equipment Co., Ltd., Wuxi, Jiangsu 214028 (CN)
(72) Inventor: CHU, Yunfei, Wuxi, Jiangsu 214028 (CN)
(74) Representative: Rau, Schneck & Hübner Patentanwälte Rechtsanwälte PartGmbB
(86) International application number: PCT/CN2024/106525
(87) International publication number: WO 2025/039811

(57) **Abstract**

The present disclosure relates to a positioning device and a battery processing apparatus. The positioning device comprises a base, a first jig and a second jig. The cell, the interconnector, and the top cover that are to be welded may be loaded at the material-loading station. Before passing through the first welding station, the second jig is first switched to the avoidance position so as to enable the second jig to avoid the cell in the first jig, allowing the tab of the cell to be smoothly pre-welded at the first welding station. After the pre-welding of the tab is completed, the second jig is then switched to the welding position, enabling positioning of the interconnector and the top cover relative to the cell. In this way, when passing through the second welding station and the third welding station, the interconnector and the top cover may be welded to the cell. It can be seen that the cell is always positioned in the first jig during the processing and does not require multiple transfers, which may avoid damage to the cell caused by frequent clamping and positioning. Therefore, the above positioning device and battery processing apparatus may improve the yield of processing the battery.

## Description

### CROSS-REFERENCE TO RELATED APPLICATIONS

The present disclosure claims priority to a Chinese patent application No. 202322225509.3 filed with the CNIPA on August 18, 2023 and entitled "POSITIONING DEVICE AND BATTERY PROCESSING APPARATUS", which is hereby incorporated by reference in its entirety.

### TECHNICAL FIELD

The present disclosure relates to the technical field of a lithium battery apparatus, and particularly to a positioning device and a battery processing apparatus.

### BACKGROUND

In the production process of lithium batteries, multiple welding procedures are typically required. For example, when producing a specific model of lithium battery, a tab must first be pre-welded to the cell, followed by welding an interconnector and a top cover to a positive tab and a negative tab of the cell, respectively.

In a typical process, a robot arm first picks up the cell from a logistics line and places it into a pre-welding jig, where a pre-welding machine performs pre-welding, trimming, and inspection processes on the tab. After the pre-welding is completed, the cell is moved by the robot arm to a pallet on the logistics line and transferred to a welding station of an interconnector. Upon arrival, the cell is picked up again by a robot arm and placed into a welding jig of the interconnector to complete the welding and inspection of the interconnector. Similarly, the cell that has completed welding of the interconnector is then moved by the robot arm to a pallet on the logistics line and transferred to a top cover welding station. Upon arrival, the cell is picked up by a robot arm and placed into a jig of the top cover to complete the welding and inspection of the top cover.

It can be seen that the cell needs undergo transfers between the pallet on the logistics line and various jigs during the processing, and requires repeated material-loading and material-unloading operations by the robot arm. Moreover, the cell needs to be repositioned after each transfer to ensure smooth welding. However, repeated picking and repositioning operations inevitably cause damage to the cell, leading to a decrease in the yield of the batteries.

### SUMMARY

In view of the above, it is necessary to provide a positioning device and a battery processing apparatus capable of improving the yield of a battery in response to the above problems.

A positioning device configured for positioning a first workpiece and a second workpiece which are to be welded, includes:
a base;
a first jig mounted on the base and capable of accommodating and positioning the first workpiece; and
a second jig capable of accommodating and positioning the second workpiece, the second jig including a welding position and an avoidance position and being operable to switch between the welding position and the avoidance position;
wherein positioning is achieved between the second workpiece within the second jig located at the welding position and the first workpiece within the first jig relative to each other, and the second jig located at the avoidance position avoids the first workpiece within the first jig.

In one of embodiments, the base includes a baseplate and a frame fixed on a surface of the baseplate, the first jig is mounted on the frame, and the frame is formed with a buffer location where the second jig located at the avoidance position is mounted.

In one of embodiments, the base is provided with a clip at one end and a latch at the other end, and the latch of each positioning device is capable of securing to or separating from the clip of an adjacent positioning device.

In one of embodiments, the clip includes two claws provided opposite to each other, the ends of which are bent inward and enclose a securing part, and the latch includes a roller which is capable of inserting and engaging with the securing part from top to bottom to secure the latch to the clip, and is capable of disengaging from the securing part from bottom to top to separate the latch from the clip.

In one of embodiments, the base is provided with a buffering-mounting structure, the first jig is provided with a first positioning-mounting structure, and the second jig is provided with a second positioning-mounting structure which is capable of being detachably connected to either the first positioning-mounting structure or the buffering-mounting structure to fix the second jig at the welding position or the avoidance position.

In one of embodiments, the first jig is detachably mounted on the base.

In one of embodiments, the first jig includes a positioning underplate capable of carrying the first workpiece, and a pressing mechanism capable of pressing the first workpiece onto the positioning underplate.

In one of embodiments, the base is mounted with two first jigs, and each first jig is correspondingly provided with two second jigs.

A battery processing apparatus includes:
a transferring device, on a conveying route of which a material-loading station, a first welding station, a second welding station, and a third welding station are provided successively; and
the positioning device according to any one of the above preferred embodiments, which is mounted on the transferring device and is capable of passing through the material-loading station, the first welding station, the second welding station, and the third welding station under the drive of the transferring device;
wherein the first jig is configured for accommodating a cell, and the second jig is provided in a pair, each configured for respectively accommodating an interconnector or a top cover.

In one of embodiments, a first operating mechanism is provided between the material-loading station and the first welding station, and is capable of switching the second jig from the welding position to the avoidance position;
a second operating mechanism is provided between the first welding station and the second welding station, and is capable of switching the second jig from the avoidance position to the welding position.

With the above positioning device and battery processing apparatus, the cell, the interconnector, and the top cover that are to be welded may be loaded at the material-loading station, and before passing through the first welding station, the second jig is first switched to the avoidance position to avoid from interference with the trimming and pre-welding operations of the tab of the cell in the first jig, thus allowing the tab of the cell to be smoothly pre-welded at the first welding station. After the pre-welding of the tab is completed, the second jig is then switched to the welding position, enabling the positioning of the interconnector and the top cover relative to the cell. In this way, when passing through the second welding station and the third welding station, the interconnector and the top cover may be welded to the cell. It can be seen that the cell is always positioned in the first jig during the processing, eliminating the need for multiple transfers, which may avoid damage to the cell caused by frequent clamping and positioning. Therefore, the above positioning device and battery processing apparatus may improve the yield of battery processing.

### BRIEF DESCRIPTION OF THE DRAWINGS

In order to more clearly illustrate embodiments of the present application or technical solutions in the prior art, accompanying drawings that need to be used in description of the embodiments or the prior art will be briefly introduced as follows. Obviously, drawings in following description are only the embodiments of the present application. For those skilled in the art, other drawings can also be obtained according to the disclosed drawings without creative efforts.
FIG. 1 shows a structural diagram of a preferred embodiment of a battery processing apparatus of the present disclosure;
FIG. 2 shows a front view of a positioning device in the battery processing apparatus shown in FIG. 1;
FIG. 3 shows a left side view of the positioning device shown in FIG. 2;
FIG. 4 shows a top view of the positioning device shown in FIG. 2;
FIG. 5 shows a front view of the positioning device in the battery processing apparatus shown in FIG. 1 in another working state;
FIG. 6 shows a left side view of the positioning device shown in FIG. 5;
FIG. 7 shows a top view of the positioning device shown in FIG. 5;

### Description of reference signs:

10. battery processing apparatus;
100. positioning device; 110. base; 111. baseplate; 112. frame; 113. clip; 1131. claw; 114. latch; 1141. roller; 115. buffering-mounting structure; 120. first jig; 121. positioning underplate; 122. pressing mechanism; 123. first positioning-mounting structure; 130. second jig;
200. transferring device; 210. upper conveyor belt; 220. lower conveyor belt; 230. lifting mechanism;
300. first operating mechanism;
400. second operating mechanism.

### DETAILED DESCRIPTION

In order to make the above objects, features and advantages of the present disclosure more clearly understood, specific embodiments of the present disclosure will be described in detail below with reference to the accompanying drawings. In a following description, numerous specific details are set forth in order to provide a thorough understanding of the present disclosure. However, the present disclosure can be implemented in many other ways different from those described here, and those skilled in the art can make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly include at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it can be a fixed connection, a detachable connection, or integrated as one-piece; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is on a higher horizontal level than the second feature. The first feature being "below", "under" and "beneath" the second feature may mean that the first feature is directly below or obliquely below the second feature, or simply means that the first feature is on a lower horizontal level than the second feature.

It should be noted that when an element is referred to as being "fixed to" or "provided on" another element, it can be directly on another element, or there may be an intervening element therebetween. When an element is referred to as being "connected" to another element, it can be directly connected to another element or intervening elements may also be present. Terms "vertical", "horizontal", "upper", "lower", "left", "right" and similar expressions used here are only for illustration purposes rather than indicating the only implementation.

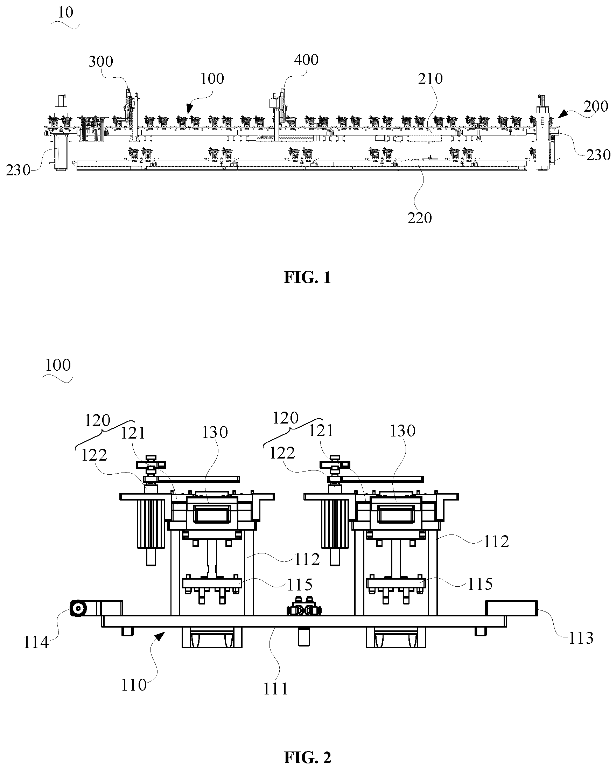

Please refer to FIG. 1. The present disclosure provides a battery processing apparatus 10 and a positioning device 100. Here, the battery processing apparatus 10 includes the positioning device 100 and a transferring device 200.

The battery processing apparatus 10 is capable of performing pre-welding of the tabs on the cell, and capable of welding the interconnector and the top cover to a positive tab and a negative tab of the cell, respectively. The positioning device 100 is configured for positioning the cell, the interconnector, and the top cover that are to be welded, so that the interconnector and the top cover are in the positions required for welding relative to the cell.

The positioning device 100 is mounted on the transferring device 200, which is capable of driving the positioning device 100 to move along a preset conveying route. Specifically, a material-loading station, a first welding station, a second welding station, and a third welding station are provided sequentially along the conveying route of the transferring device 200, and the positioning device 100 may pass through these stations sequentially under driving of the transferring device 200.

Respective welding devices (not shown in the figure) may be provided at the first welding station, second welding station, and third welding station, respectively, such as ultrasonic welding machines and other actuating elements. The cell, the interconnector, and the top cover at the material-loading station can be loaded onto the positioning device 100; when the positioning device 100 passes through the first welding station, it is possible to perform operations such as pre-welding, trimming, and inspection on the tab of the cell; when the positioning device 100 passes through the second welding station, the interconnector may be welded to the positive tab of the cell; when the positioning device 100 passes through the third welding station, the top cover may be welded to the negative tab of the cell. The transferring device 200 usually is mounted with a plurality of positioning devices 100 so as to ensure continuous processing.

Furthermore, there is generally a material-unloading station following the third welding station, and at the material-unloading station, the finished welded cell may be unloaded and transferred to other apparatus for subsequent processes.

The transferring device 200 may take the form of conveyor belt, conveyor chain, etc., and the positioning device 100 can be driven by a motor and other driving part to move along the conveying route. Specifically, in the present embodiment, the transferring device 200 includes an upper conveyor line 210, a lower conveyor line 220, and a lifting mechanism 230.

The upper conveyor line 210 and the lower conveyor line 220 are approximately parallel, and the positioning device 100 may be conveyed in opposite directions on the upper conveyor line 210 and the lower conveyor line 220. The lifting mechanism 230 is mounted at both ends of the lower conveyor line 220 and may transfer the positioning device 100 from the upper conveyor line 210 to the lower conveyor line 220 and vice versa, thus allowing the positioning device 100 to cycle sequentially through the material-loading station, the first welding station, the second welding station, the third welding station, and the material-unloading station.

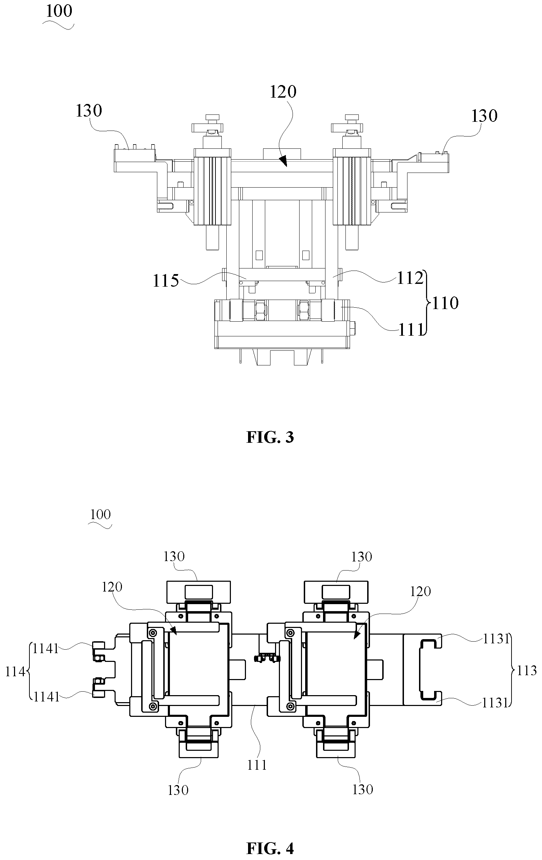

Please also refer to FIGS. 2, 3, and 4. In a preferred embodiment of the positioning device 100, it includes a base 110, a first jig 120, and a second jig 130.

The base 110 serves a supporting role, and the first jig 120 and the second jig 130 may be mounted on the base 110. Specifically, the positioning device 100 is mounted on the transferring device 200 via the base 110, and specifically, the base 110 may be slidably mounted to the transferring device 200 via components such as sliders and rails.

In the present embodiment, the base 110 is provided with a clip 113 at one end, and is provided with a latch 114 at the other end. The latch 114 of each positioning device 100 is capable of securing to or separating from the clip 113 of an adjacent positioning device 100.

The clip 113 and the latch 114 of adjacent positioning devices 100 cooperate with each other, allowing the plurality of positioning devices 100 to be connected end-to-end. Thus, when the transferring device 200 drives the plurality of positioning devices 100 to move along the conveying route, only by driving one or some of the positioning devices 100 to move, other positioning devices 100 may be driven to move simultaneously. In this way, it is possible to significantly reduce the number of drive components in the transferring device 200, thereby simplifying the structure and reducing costs.

Further, in the present embodiment, the clip 113 includes two claws 1131 provided opposite to each other, the ends of which are bent inward and enclose a securing part (not labeled in the figure), and the latch 114 includes a roller 1141 which is capable of inserting and engaging with the securing part from top to bottom to secure the latch 114 to the clip 113, and is capable of disengaging from the securing part from bottom to top to separate the latch 114 from the clip 113.

Specifically, the claws 1131 are bent into an L-shape, and the two L-shaped claws 1131 enclose the securing part. When the roller 1141 is inserted from top to bottom into the space between the two L-shaped claws 1131, the bent ends of the claws 1131 may obstruct the roller 1141 and thus may allow engagement of the latch 114, thereby connecting the latch 114 to the clip 113. Moreover, the roller 1141 and the claws 1131 can roll against each other without getting stuck. To separate the two positioning devices 100 from each other, it is sufficient to lift one of the positioning devices 100 to disengage the roller 1141 from the securing part from top to bottom, which makes both engagement and disengagement of the latch 114 more convenient.

For example, as shown in FIG. 1, when it is necessary to transfer a positioning device 100 from the upper conveyor line 210 to the lower conveyor line 220, the lifting mechanism 230 first lifts the positioning device 100 to disengage its latch 114 from the clip 113 of the adjacent positioning device 100, thereby separating the positioning device 100 from the adjacent positioning device 100. Then, the lifting mechanism 230 places the positioning device 100 on the lower conveyor line 220 and engages its roller 1141 with the securing part of the adjacent positioning device 100, thereby connecting the positioning device 100 to the positioning device 100 on the lower conveyor line 220. When it is necessary to transfer a positioning device 100 from the lower conveyor line 220 to the upper conveyor line 210, the process is similar. It can be seen that the positioning device 100 only needs to be lifted and put down by the lifting mechanism 230 during the transfer of the positioning device 100, without the need for additional operations to engage/disengage the latch 114 with/from the clip 113, making the operation more convenient and helping to improve processing efficiency.

More specifically, in the present embodiment, the base 110 includes a baseplate 111 and a frame 112 fixed on a surface of the baseplate 111. The baseplate 111 is roughly rectangular, and the latch 114 and the clip 113 are respectively provided at two ends of the baseplate 111 in the length direction; the first jig 120 and the second jig 130 can be mounted on the frame 112.

The first jig 120 is capable of accommodating and positioning the first workpiece, and the second jig 130 is capable of accommodating and positioning the second workpiece. Specifically, in the present embodiment, the first workpiece refers to the cell, and the second workpiece refers to the interconnector and the top cover. Further, in the present embodiment, the first jig 120 includes a positioning underplate 121 and a pressing mechanism 122, the positioning underplate 121 is capable of carrying the first workpiece, and the pressing mechanism 122 is capable of pressing the first workpiece onto the positioning underplate 121.

The first workpiece, which is the cell, is usually loose when loaded into the first jig 120. Under the action of the pressing mechanism 122, the cell may be kept pressed, thus avoiding deformation of the cell. The positioning underplate 121 is typically formed from the metal material, has high mechanical strength, is not prone to deformation, and may specifically be a block structure with a receiving cavity. The pressing mechanism 122 may include a cylinder and a pressing plate, with the pressing plate pressing the cell inside the positioning underplate 121 under driving of the cylinder.

The base 110 may be provided with only one first jig 120, or it may be provided with a plurality of first jigs 120. For the case where the base 110 is provided with the plurality of first jigs 120, the second jig 130 may be correspondingly provided for each first jig 120, and the first workpiece and the second workpiece to be welded may be respectively located in the corresponding first jig 120 and second jig 130. Subsequent descriptions regarding the relative positions and connections of the first jig 120 and the second jig 130 are all made for the corresponding first jig 120 and second jig 130. Each first jig 120 may be configured for only one second jig 130 correspondingly, or it may be configured for a plurality of second jigs 130 correspondingly. As shown in FIG. 2, the base 110 is provided with two first jigs 120, and thus may position two first workpieces, i.e., cells, simultaneously; and each first jig 120 is correspondingly provided with two second jigs 130, which are configured for accommodating the interconnector and the top cover, respectively.

It should be noted that in other embodiments, the positioning device 100 may also be applied to the welding of more than two workpieces. At this time, the number of the second jigs 130 corresponding to each first jig 120 may also be adjusted according to the number of the second workpieces to be welded.

The relative position of the second jig 130 and the first jig 120 is not fixed, but adjustable. Furthermore, the second jig 130 includes a welding position and an avoidance position, and may be operable to switch between the welding position and the avoidance position.

As shown in FIGS. 2 to 4, the relative position of the second jig 130 and the first jig 120 is pre-positioned, and when the second jig 130 is in the welding position, positioning is achieved between the second workpiece within the second jig 130 and the first workpiece within the first jig 120 relative to each other. That is, the second workpiece within the second jig 130 and the first workpiece within the first jig 120 are exactly in the position required for welding. Specifically, the two second jigs 130 in the welding position are located on two sides of the first jig 120 respectively, and the interconnector and the top cover within the two second jigs 130 are exactly in the position required for welding relative to the cell.

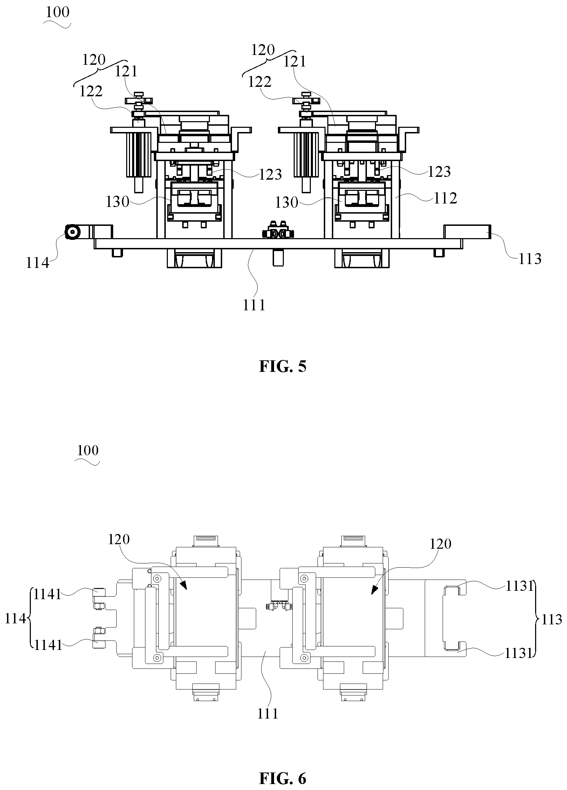

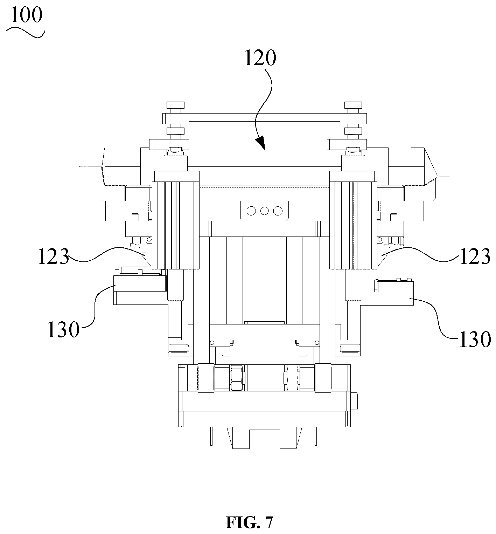

As shown in FIGS. 5 to 7, when the second jig 130 is in the avoidance position, it may avoid the first workpiece within the first jig 120, and the second jig 130 will not interfere with the processing of the first workpiece. During processing the battery, the cell, the interconnector, and the top cover that are to be welded may be loaded at the material-loading station into the first jig 120 and the two second jig 130 respectively; before the transferring device 200 drives the positioning device 100 to pass through the first welding station, they first switch the two second jigs 130 from the welding position to the avoidance position. In this way, the second jig 130 avoids the cell within the first jig 120, and thus may prevent the second jig 130 from interfering with the trimming and pre-welding operations of the tab of the cell, thereby smoothly pre-welding the tab of the cell; after the pre-welding of the tab is completed, the two second jigs 130 are then switched from the avoidance position to the welding position. At this time, the cell, the interconnector, and the top cover are positioned relative to each other. Therefore, when the transferring device 200 drives the positioning device 100 to pass through the second welding station and the third welding station, the interconnector and the top cover may be respectively welded to the positive tab and the negative tab of the cell.

It can be seen that during processing the battery, the cell, the interconnector, and the top cover are all positioned in the corresponding jig without replacement of the jig, causing high positioning consistency and thus facilitating to improve the stability of welding. Moreover, since the cell is always positioned in the first jig 120, eliminating the need for multiple transfers, which may avoid damage to the cell caused by frequent clamping and positioning, thereby facilitating to improve the yield of processing the battery.

Specifically, in the present embodiment, the frame 112 has a buffer location thereon, and the second jig 130 at the avoidance position is mounted in the buffer location. The buffer location is usually a location of the frame 112 near the baseplate 111, and is below the first jig 120. The buffer location may provide installation space for the second jig 130 at the avoidance position, thereby preventing it from interference with other components during the synchronous movement of the second jig 130 along with the base 110 and the first jig 120.

Please refer again to FIGS. 2, 4, 5, and 7, in the present embodiment, the base 110 is provided with a buffering-mounting structure 115, the first jig 120 is provided with a first positioning-mounting structure 123, and the second jig 130 is provided with a second positioning-mounting structure (not shown in the figure). Wherein, the second positioning-mounting structure is capable of being detachably connected to either the first positioning-mounting structure 123 or the buffering-mounting structure 115 to fix the second jig 130 at the welding position or the avoidance position.

Specifically, the first positioning-mounting structure 123, the second positioning-mounting structure, and the buffering-mounting structure 115 may be in the form of pins and clips, which enables positioning and mounting between each other. When switching the second jig 130 from the welding position to the avoidance position, the second positioning-mounting structure is first operated to disengage from the first positioning-mounting structure 123, and then the second positioning-mounting structure is operated to engage with the buffering-mounting structure 115. And when switching the second jig 130 from the avoidance position to the welding position, the second positioning-mounting structure is first operated to disengage from the buffering-mounting structure 115, and then is operated to engage with the first positioning-mounting structure 123. By mounting the second positioning-mounting structure with the first positioning-mounting structure 123 and the buffering-mounting structure 115, it is possible to prevent the second jig 130 from loosening, thereby ensuring the positioning accuracy of the second jig 130.

Please refer again to FIG. 1, in the present embodiment, a first operating mechanism 300 is provided between the material-loading station and the first welding station, and is capable of switching the second jig 130 from the welding position to the avoidance position; a second operating mechanism 400 is provided between the first welding station and the second welding station, and is capable of switching the second jig 130 from the avoidance position to the welding position.

The first operating mechanism 300 and the second operating mechanism 400 may have the same structure, and both may be the mechanical arm. When the positioning device 100 passes through the first operating mechanism 300 and the second operating mechanism 400, the first operating mechanism 300 and the second operating mechanism 400 may switch the position of the second jig 130, thereby improving the automation level of the battery processing apparatus 10.

Furthermore, in the present embodiment, the first jig 120 may be detachably mounted on the base 110. Therefore, when unloading the welded cell, the first jig 120 may be removed from the base 110 and unloaded together with the cell inside it as a whole. In this way, the cell may maintain its positioned and pressed states in the first jig 120, and may prevent tearing of the tab of the cell, thereby further improving the yield of processing the battery.

Moreover, in the present embodiment, a jig return station is also followed the unloading station. At the jig return station, vacant first jigs 120 on other apparatuses may be placed and mounted on the base 110 to compensate for the absence of the first jig 120 caused by the overall unloading of the cell, thereby ensuring that there is always the first jig 120 on the positioning device 100 that returns to the material-loading station.

Obviously, in other embodiments, the first jig 120 may also be fixed to the base 110, and when unloading the cell, it is only necessary to remove the cell from the first jig 120. In addition, the first jig 120 may also be transferred along with the cell and may be mounted together on the base 110 at the material-loading station.

With the above positioning device 100 and battery processing apparatus 10, the cell, the interconnector, and the top cover that are to be welded may be loaded at the material-loading station, and before passing through the first welding station, the second jig 130 is first switched to the avoidance position so as to avoid the second jig 130 from interference with the trimming and pre-welding operations of the tab of the cell in the first jig 120, and thus the tab of the cell may be smoothly pre-welded at the first welding station. After the pre-welding of the tab is completed, the second jig 130 is then switched to the welding position, which may enable positioning of the interconnector and the top cover relative to the cell. In this way, when passing through the second welding station and the third welding station, the interconnector and the top cover may be welded to the cell. It can be seen that the cell is always positioned in the first jig 120 during the processing, eliminating the need for multiple transfers, which may avoid damage to the cell caused by frequent clamping and positioning. Therefore, the above positioning device 100 and battery processing apparatus 10 may improve the yield of processing the battery.

The technical features of the above embodiments can be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A positioning device configured for positioning a first workpiece and a second workpiece which are to be welded, **characterized in that** the positioning device (100) comprises:
a base (110);
a first jig (120) mounted on the base (110) and capable of accommodating and positioning the first workpiece; and
a second jig (130) capable of accommodating and positioning the second workpiece, the second jig (130) comprising a welding position and an avoidance position and being operable to switch between the welding position and the avoidance position;
wherein positioning is achieved between the second workpiece within the second jig (130) located at the welding position and the first workpiece within the first jig (120) relative to each other, and the second jig (130) located at the avoidance position avoids the first workpiece within the first jig (120).

2. The positioning device according to claim 1, **characterized in that** the base (110) comprises a baseplate (111) and a frame (112) fixed on a surface of the baseplate, the first jig (120) is mounted on the frame (112), and the frame (112) is formed with a buffer location where the second jig (130) located at the avoidance position is mounted.

3. The positioning device according to claim 1, **characterized in that** the base (110) is provided with a clip (113) at one end and a latch (114) at the other end, and the latch (114) of each positioning device is capable of securing to or separating from the clip (113) of an adjacent positioning device.

4. The positioning device according to claim 3, **characterized in that** the clip (113) comprises two claws (1131) provided opposite to each other, the ends of which are bent inward and enclose a securing part, and the latch (114) comprises a roller (1141) which is capable of inserting and engaging with the securing part from top to bottom to secure the latch (114) to the clip (113), and is capable of disengaging from the securing part from bottom to top to separate the latch (114) from the clip (113).

5. The positioning device according to claim 1, **characterized in that** the base (110) is provided with a buffering-mounting structure (115), the first jig (120) is provided with a first positioning-mounting structure (123), and the second jig (130) is provided with a second positioning-mounting structure which is capable of being detachably connected to either the first positioning-mounting structure (123) or the buffering-mounting structure (115) to fix the second jig (130) at the welding position or the avoidance position.

6. The positioning device according to claim 1, **characterized in that** the first jig (120) is detachably mounted on the base (110).

7. The positioning device according to claim 1, **characterized in that** the first jig (120) comprises a positioning underplate (121) capable of carrying the first workpiece, and a pressing mechanism (122) capable of pressing the first workpiece onto the positioning underplate (121).

8. The positioning device according to any one of claims 1 to 7, **characterized in that** the base (110) is mounted with two first jigs (120), and each first jig (120) is correspondingly provided with two second jigs (130).

9. A battery processing apparatus, **characterized by** comprising:
a transferring device (200), on a conveying route of which a material-loading station, a first welding station, a second welding station, and a third welding station are provided successively; and
the positioning device (100) according to any one of claims 1 to 8, which is mounted on the transferring device (200), and is capable of passing through the material-loading station, the first welding station, the second welding station, and the third welding station under the drive of the transferring device (200);
wherein the first jig (120) is configured for accommodating a cell, and the second jig (130) is provided in a pair, each configured for respectively accommodating an interconnector or a top cover.

10. The battery processing apparatus according to claim 9, **characterized in that** a first operating mechanism (300) is provided between the material-loading station and the first welding station, and is capable of switching the second jig (130) from the welding position to the avoidance position; and
a second operating mechanism (400) is provided between the first welding station and the second welding station, and is capable of switching the second jig (130) from the avoidance position to the welding position.
